# EUROPEAN PATENT SPECIFICATION

(11) **EP 4 530 505 B1**
(45) Date of publication and mention of the grant of the patent: **22.10.2025**
(21) Application number: 23382993.6
(22) Date of filing: 29.09.2023
(51) Int. Cl.: F16K 1/22, F16K 17/36

(54) **FIRE-RESISTANT VALVE FOR HIGH-SPEED RAILWAY TUNNELS**
BRANDSCHUTZVENTIL FÜR SCHNELLAUFENDE EISENBAHNTUNNEL
VANNE RÉSISTANTE AU FEU POUR TUNNELS FERROVIAIRES À GRANDE VITESSE

(43) Date of publication of application: 02.04.2025
(73) Proprietor: Talleres Zitrón, S.A., 33211 Gijón (ES)
(72) Inventor: ARIAS ALVAREZ, ROBERTO, 33211 GIJON (ES); OTERO FERNANDEZ, JOSE CARLOS, 33211 GIJON (ES); GONZALEZ NORNIELLA, JORGE, 33211 GIJON (ES); SALVADO GARCIA, ADRIAN, 33211 GIJON (ES)
(74) Representative: Del Valle Valiente, Sonia

(56) References cited:
- CN-A- 110 296 221
- CN-A- 114 838 143
- CN-A- 115 370 814
- US-A- 4 559 867
- US-A- 4 648 418
- US-A1- 2018 185 680

## Description

### OBJECT OF THE INVENTION

The present invention belongs to the field of transport infrastructure, and more particularly to fire protection inside railway tunnels.

The object of the present invention is a fire-resistant valve specifically designed to withstand the *"piston effect'* in railway tunnels, that is, the pressure wave caused by a high-speed train entering a tunnel.

### PRIOR ART OF THE INVENTION

In any transport infrastructure, tunnels are specially critic from the point of view of security, since it is difficult for people to escape an emergency. For that reason, nowadays a secondary, emergency tunnels is usually provided in parallel to the main tunnel. The emergency tunnel may be a dedicated tunnel, or else a tunnel for trains running in the opposite direction. In any case, the main tunnel and the emergency tunnel are connected by corridors provided at regular intervals. Each corridor has a door to the main tunnel and a door to the emergency tunnel. In case of emergency, people can therefore escape the main tunnel by opening a first door to one of the corridors, passing through the corridor, and then opening a second door to the emergency tunnel.

However, when the emergency is a fire, once the first and second doors are opened by people escaping through the corridor, smoke from the main tunnel may also pass through the corridor towards the emergency tunnel. To prevent this from happening, it is known to provide at least one fan between the emergency tunnel and the corridor, and/or between the corridor and the main tunnel. Optionally, a silencer may also be provided between the fans and the corridor. These fans create an airflow through the corridor from the emergency tunnel towards the main tunnel, thereby preventing smoke from the main tunnel from entering into the emergency tunnel.

During normal use, when there is no emergency, the fans mentioned above are inactive. However, they provide a path for foul air inside the main tunnel towards the emergency tunnel.

Therefore, to maintain the corridor fully separated from the main tunnel and the emergency tunnel during normal use of the tunnel, a fire-resistant valve adjacent each of the fans is provided for separating the fan from the corresponding tunnel. The valve is fire-resistant, since it must withstand the high temperature inside the tunnel when there is a fire.

During normal use, when the fans are inactive, the fire-resistant valve is closed. No air can pass through the corridor from the main tunnel towards the emergency tunnel. When an emergency occurs, the fire-resistant valve automatically opens and, at the same time, the fan starts. An airflow passes through the corridor from the emergency tunnel towards the main tunnel, preventing smoke from entering the emergency tunnel along with the people escaping the fire.

While this security system is useful in normal tunnels, a problem arises when installed in high-speed train tunnels. High-speed trains passing through the main tunnel cause a pressure wave moving through the tunnel from the entrance towards the exit. This is known as the *"piston effect".* The pressure wave caused by the piston effect could be as high as 10.000 Pa. This pressure wave breaks conventional fire-resistant valves.

To solve this problem, an additional, high-pressure valve can be added over the conventional fire-resistant valve. In this manner, two consecutive valves are provided: a fire-resistant valve, and a pressure-resistant valve. While this solution duly solves the problem, it requires twice the space of a single valve.

Document US4559867A discloses a transversely circular fire damper having a butterfly type blade operated by a jack shaft spaced longitudinally of the housing from the blade axle.

Document CN115370814A discloses a heat-resistant three-eccentric center butterfly valve which comprises a valve body, a valve seat arranged in the valve body, a valve rod rotationally arranged on the valve body and a valve plate connected to the valve rod, and the valve body comprises a shell and a refractory cement layer arranged on the inner wall of the shell.

Document CN110296221A discloses a lever type soft sealing butterfly valve.

### DESCRIPTION OF THE INVENTION

The inventors of the present invention have developed a novel fire-resistant valve that can also withstand pressure waves of the type caused by the piston effect in high-speed train tunnels. This valve has a closure disc having two layers, i.e. an outer fire-resistant layer and an inner pressure-resistant layer, thereby solving the problem in a much more compact manner.

The present invention is therefore directed to a fire-resistant valve for high-speed railway tunnels. The valve comprises a cylindrical main body and a circular disc, where the disc rotates around a radial axle contained in an end plane of the main body, the end plane being perpendicular to an axis of the cylindrical main body. With this configuration, the circular disc alternates between a closed position and an open position. In the closed position, the circular disc is contained in the end plane and abuts against a circular end edge of the cylindrical body, thereby creating an airtight seal that prevents smoke from passing through when the fan is inactive in the absence of an emergency. In the open position, the circular disc is contained in a plane in parallel to the axis of the cylindrical main body, thereby allowing air to flow through the valve when the fan is started during an emergency.

The features disclosed above form part of the state of the art, since they correspond to a conventional fire-resistant valve of the type commonly employed in this field. However, unlike conventional fire-resistant valves, the disc of the present fire-resistant valve comprises two distinct layers: an outer fire-resistant layer configured for withstanding heat from a fire, coupled to an inner pressure-resistant resistant layer configured for withstanding a pressure wave caused by a high-speed train entering a tunnel. As mentioned above, the pressure caused by a high-speed train could be as high as 10.000 Pa. The inner pressure-resistant layer thereby provides support to the outer fire-resistant layer, ensuring that the valve as a whole withstands the pressure.

The pressure-resistant layer could be configured in a number of different manners provided it can withstand the above-mentioned pressure for providing support to the fire-resistant outer layer. According to the claimed invention, the inner pressure-resistant layer comprises an intermediate metal base plate and an inner rigid frame connected to said intermediate base plate. The intermediate base plate is rigid enough for providing a flat support surface for the outer fire-resistant layer, but it is the inner rigid frame that truly withstands the pressure.

According to the claimed invention, the inner rigid frame comprises a plurality of metal bars having an essentially square cross-section rigidly connected to an inner face of the base plate. The dimensions and thickness of the metal bars are selected to ensure that the frame does withstand the required pressure.

According to the claimed invention, the radial axle comprises a central portion and respective end portions. The central portion comprises a radial metal bar of the inner rigid frame, and the end portions are connected to the radial metal bar by means of bushings. The bushings therefore connect the radial metal bar of the frame, having an essentially square cross-section, with the cylindrical end portions of the axle. These end portions, in turn, pass through holes of the main body. This configuration provides the rigid frame with a firm support against the external surface of the main body, thereby ensuring that the disc as a whole is not displaced by the pressure wave.

The inner rigid frame could have any configuration provided it withstands the inward force caused by the pressure wave inside the tunnel. In a particularly preferred embodiment of the invention, the inner rigid frame is shaped as a square superposed by a cross. More particularly, the square of the inner rigid frame comprises four bars making a square, the cross of the inner rigid frame comprises two bars making up a cross, where each of the bars making up the cross are parallel to a respective pair of bars making up the square. Finally, one of the bars making up the cross is the central portion of the radial axle.

Preferably, the fire-resistant layer is between 40 mm and 80 mm thick. The fire-resistant layer could be made of any material suitable for withstanding fire temperatures. Fire-resistant materials can comprise intumescent materials. Examples of fire-resistant materials are ceramic materials, calcium silicate, magnesium oxide, alumina oxide, silica oxide, or the like.

In principle, the fire-resistant layer can be coupled with the pressure-resistant layer in any suitable manner. For example, according to a particularly preferred embodiment of the invention, the fire-resistant layer is screwed to the pressure-resistant layer, and more preferably to the intermediate base plate of the pressure-resistant layer. The screws used to screw the fire-resistant layer to the pressure-resistant layer are preferably covered with a fire-resistant silicone. Further, the valve preferably further comprises a fire-resistant adjustment flange coupled to a front side of the end edge of the cylindrical body. The front side of the valve as a whole is therefore suitably protected against high temperatures.

In the valve of the invention, an airtight fit is needed between the circular disc and the end edge of the cylindrical body. Thereto, an intumescent seal ring is provided at the periphery of the fire-resistant layer of the circular disc for ensuring an airtight abutment of said circular disc against said end edge of the cylindrical body.

In still a further preferred embodiment of the invention, the valve comprises a motor configured to cause the circular disc to move between the open position and the closed position.

### BRIEF DESCRIPTION OF THE FIGURES

Fig. 1 shows a schematic view of the tunnel system where the valve of the invention is normally employed.
Figs. 2A and 2B show a perspective view of the fire-resistant valve according to the invention respectively in a closed position and in an open position.
Fig. 3 shows an exploded view of the fire-resistant valve according to the invention.
Fig. 4 shows a detailed view of the upper portion of the valve according to the invention.
Fig. 5 shows a view of the pressure-resistant portion of the circular disc of the valve according to the invention.

### PREFERRED EMBODIMENT OF THE INVENTION

A particularly preferred embodiment of the invention is disclosed in connection with the attached figures.

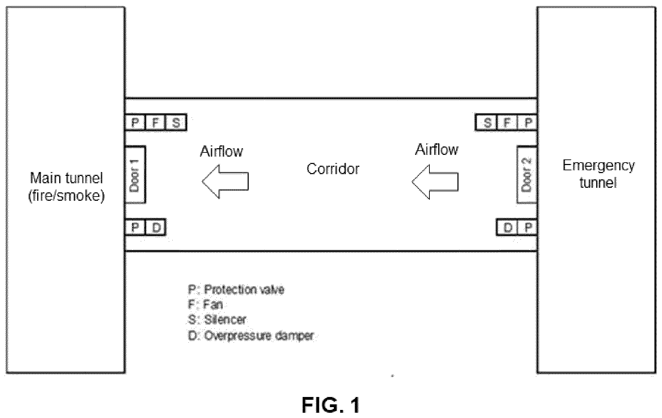

Figs. 1 schematically shows a prior art emergency system for railway tunnels. There is a main tunnel and an emergency tunnel connected by a corridor (again, note that the emergency tunnel may be a tunnel for trains running in an opposite direction with respect to those running through the main tunnel). Two sets of devices are installed at the wall separating each tunnel from the corridor. A first set includes a protection valve (P) immediately at the wall side, then an emergency fan (F), and then a silencer (S). A second set comprises a protection valve (P) at the wall side, then an overpressure damper (D).

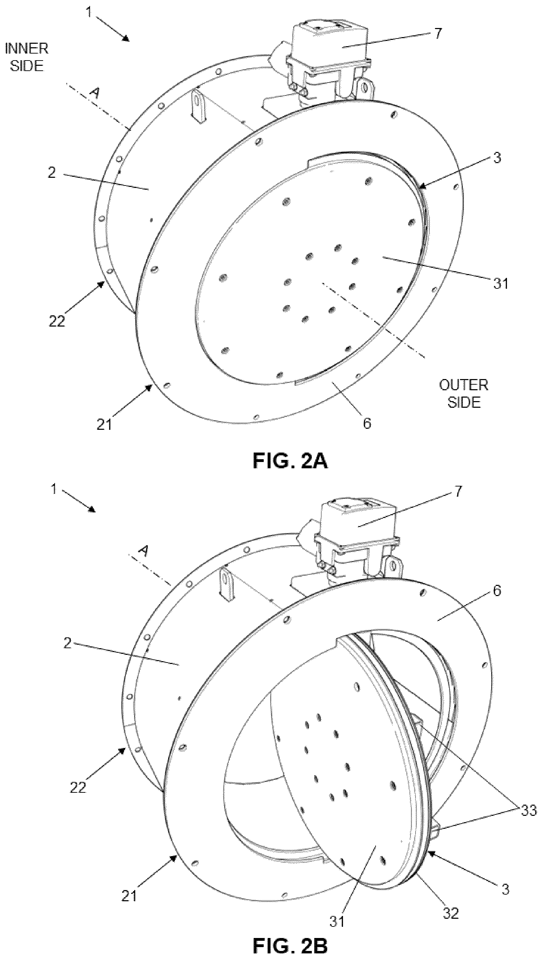

Fig. 2-5 show several views of the valve (1) of the invention. The valve comprises a cylindrical body (2) delimited at each end (21, 22) by two planes in perpendicular to a longitudinal axis (A) of said body (2). An inner end (22) of the body (2) is facing the corridor (inner side), while an outer end (21) of the body (2) is facing the tunnel (outer side). The cylindrical body (2) comprises a cylindrical protection cover (8) attached thereto.

A circular disc (3) is rotatably coupled to the cylindrical body (2) at the outer end. In particular, the disc (3) is fixed to a radial rotation axle (4) contained in the end plane of the body at the outer end (21) and having ends coupled to opposite portions of the body (2). The circular disc (3) rotates around the rotation axle (4) for alternating between a closed position (shown in Fig. 2A) and an open position (shown in Fig. 2B). In the closed position, the disc (3) is contained in the plane delimiting the outer end (21) of the body (2), such that the circular edge of the disc (3) abuts against the circular edge of the outer end (21) of the cylindrical body (2) for creating an airtight seal. In the open position, the disc (3) is in parallel with the longitudinal axis (A) of the body (2), and therefore air can flow through the valve (1). A motor (7) attached to the external surface of the cylindrical body (2) actuates the rotation axle (4) for causing the disc (3) to move between the closed and open positions.

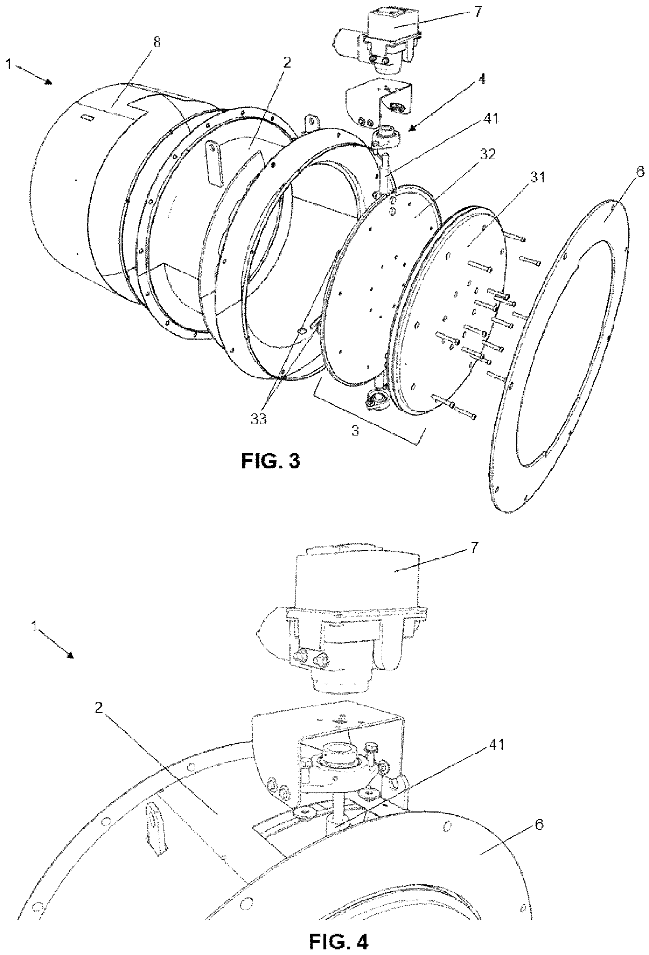

According to the present invention, the disc (3) is made by two layers: an outer fire-resistant layer (31) and an inner pressure-resistant layer (32, 33). Fig. 3 shows these layers (31, 32, 33) in greater detail.

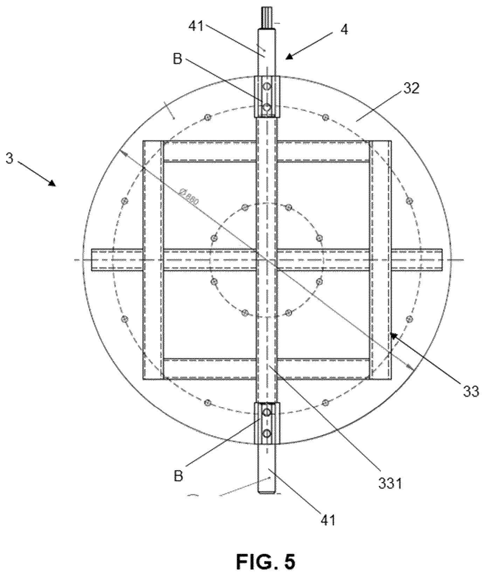

The inner pressure-resistant layer (32, 33) comprises an intermediate metal base plate (32) and an inner rigid frame (33) attached thereto. As shown in Fig. 5, the frame (33) is formed by a number of metal bars having an essentially square cross-section and rigidly connected ones to the other forming a single unit. In this particular embodiment, the frame (33) comprises two pairs of parallel bars connected to form a square. Centred in this square, and in parallel thereto, a cross formed by two bars forming a 90º angle are provided. The bars making up the frame (33) are joined ones to the others at each intersection by any suitable means such as, e.g. welding. The frame (33) is attached to the intermediate base plate (32) by any suitable means such as e.g. screwing or welding.

A bar (331) of the two bars making up the cross of the inner rigid frame (33) makes up a central portion of the rotation axle (4). Bar (331), oriented in a vertical direction in the figures, has bushings (B) at the ends for connecting said bar (331) having a square cross section with the cylindrical end portions (41) of the rotation axle (4). The bushings (B) have a pair of holes for attachment to the bar (331) and to the cylindrical end portions (41) by means of screws. These circular end portions (41) pass through respective holes in the cylindrical body (2). The axle (41) therefore cannot be displaced either inwards or outwards when subjected to the pressure wave, therefore providing the valve (1) with a suitable resistance.

The outer fire-resistant layer (31) is a 60 mm thick plate made of a fire-resistant material. The fire-resistant layer (31) is connected to the base plate (32) of the pressure-resistant layer (33) by means of a plurality of screws. The outer ends of the screws, normally the head, are protected by means of a fire-resistant silicone material.

To ensure a suitable airtight abutment of the disc (3) against the end edge (21) of the body (2) when the valve (1) is in the closed position, the periphery of the disc (3) comprises an intumescent seal ring. This ring ensures an airtight closure even in case temperatures rise over 190ºC, in which case the seal ring expands. In addition, to protect the front side of the flange making up the outer end of the body (2), an adjustment flange (6) made of a suitable fire-resistant material is provided for covering said front side.

As shown in Fig. 4, the upper end portion (41) of the axle is actuated by a motor (7). Therefore, in the event of an emergency, the valve (1) of the invention is opened and the respective fan activated.

## Claims

1. Fire-resistant valve (1) for high-speed railway tunnels, comprising a cylindrical main body (2) and a circular disc (3), wherein the disc (3) rotates around a radial axle (4) contained in an end plane of the main body (2), wherein the end plane is perpendicular to an axis (A) of the cylindrical main body (2), such that the circular disc (3) alternates between a closed position where it is contained in said end plane and abuts against a circular end edge (21) of the cylindrical body (2), and an open position where it is contained in a plane parallel to the axis (A) of the cylindrical main body (2),
wherein
the disc (3) comprises an outer fire-resistant layer (31) configured for withstanding heat from a fire, coupled to an inner pressure-resistant resistant layer (32, 33) configured for withstanding a pressure wave caused by a high-speed train entering a tunnel,
wherein the inner pressure-resistant layer (31) comprises an intermediate metal base plate (32) and an inner rigid frame (33) connected to said intermediate base plate (32),
wherein the inner rigid frame (33) comprises a plurality of metal bars having an essentially square cross-section rigidly connected to an inner face of the base plate (32), and
wherein the radial axle (4) comprises a central portion and respective end portions (41), the central portion comprising a radial metal bar (331) of the inner rigid frame (33), and the end portions (41) being connected to the radial metal bar (331) by means of bushings (B).

2. Fire-resistant valve (1) according to claim 1, wherein the inner rigid frame (33) is shaped as a square superposed by a cross.

3. Fire-resistant valve (1) according to claim 2, wherein the square of the inner rigid frame (33) comprises four bars making a square, the cross of the inner rigid frame (33) comprises two bars making up a cross, where each of the bars making up the cross are parallel to a respective pair of bars making up the square, and wherein one bar (331) of the two bars making up the cross is the central portion of the radial axle (4).

4. Fire-resistant valve (1) according to any of the previous claims, wherein the fire-resistant layer (31) is screwed to the pressure-resistant layer (32, 33).

5. Fire-resistant valve (1) according to claim 4, wherein the fire-resistant layer (31) is screwed to the intermediate base plate (32) of the pressure-resistant layer (32, 33).

6. Fire-resistant valve (1) according to any of claims 4-5, wherein the screws used to screw the fire-resistant layer (31) to the pressure-resistant layer (32, 33) are covered with a fire-resistant silicone.

7. Fire-resistant valve (1) according to any of the previous claims, wherein the fire-resistant layer (31) is between 40 mm and 80 mm thick.

8. Fire-resistant valve (1) according to any of the previous claims, further comprising a fire-resistant adjustment flange (6) coupled to a front side of the end edge (21) of the cylindrical body (2).

9. Fire-resistant valve (1) according to any of the previous claims, further comprising an intumescent seal ring provided at the periphery of the fire-resistant layer (31) of the circular disc (3) for ensuring an airtight abutment of said circular disc (3) against the circular end edge (21) of the cylindrical body (2).

10. Fire-resistant valve (1) according to any of the previous claims, further comprising a motor (7) configured to cause the circular disc (3) move between the open position and the closed position.

## Patentansprüche

1. Feuerbeständiges Ventil (1) für Hochgeschwindigkeitseisenbahntunnel, das einen zylindrischen Hauptkörper (2) und eine kreisförmige Scheibe (3) umfasst, wobei sich die Scheibe (3) um eine radiale Achse (4) dreht, die in einer Endebene des Hauptkörpers (2) enthalten ist, wobei die Endebene senkrecht zu einer Achse (A) des zylindrischen Hauptkörpers (2) steht, derart, dass die kreisförmige Scheibe (3) zwischen einer geschlossenen Position, in der sie in der Endebene enthalten ist und an einer kreisförmigen Endkante (21) des zylindrischen Körpers (2) anliegt, und einer offenen Position wechselt, in der sie in einer Ebene parallel zur Achse (A) des zylindrischen Hauptkörpers (2) enthalten ist,
wobei die Scheibe (3) eine äußere feuerbeständige Schicht (31) umfasst, die zum Bestehen gegenüber Hitze von einem Feuer ausgelegt ist, an eine innere druckbeständige Widerstandsschicht (32, 33) gekoppelt ist, die zum Bestehen gegenüber einer Druckwelle ausgelegt ist, die durch das Einfahren eines Hochgeschwindigkeitszugs in einen Tunnel veranlasst wird, wobei die innere druckbeständige Schicht (31) eine Zwischengrundplatte (32) aus Metall und einen inneren starren Rahmen (33) umfasst, der mit der Zwischengrundplatte (32) verbunden ist,
wobei der innere starre Rahmen (33) eine Vielzahl von Metallstangen umfasst, die einen im Wesentlichen quadratischen Querschnitt aufweisen, die starr mit einer Innenseite der Grundplatte (32) verbunden sind, und
wobei die radiale Achse (4) einen zentralen Abschnitt und jeweilige Endabschnitte (41) umfasst, wobei der zentrale Abschnitt eine radiale Metallstange (331) des inneren starren Rahmens (33) umfasst und wobei die Endabschnitte (41) mit der radialen Metallstange (331) mittels Buchsen (B) verbunden sind.

2. Feuerbeständiges Ventil (1) nach Anspruch 1, wobei der innere starre Rahmen (33) wie ein Quadrat geformt ist, das von einem Kreuz überlagert wird.

3. Feuerbeständiges Ventil (1) nach Anspruch 2, wobei das Quadrat des inneren starren Rahmens (33) vier Stangen umfasst, die ein Quadrat bilden, das Kreuz des inneren starren Rahmens (33) zwei Stangen umfasst, die ein Kreuz bilden, wo jede der Stangen, die das Kreuz bilden, parallel zu einem jeweiligen Paar von Stangen, die das Quadrat bilden, parallel verlaufen und wobei eine Stange (331) der zwei Stangen, die das Kreuz bilden, der zentrale Abschnitt der radialen Achse (4) ist.

4. Feuerbeständiges Ventil (1) nach einem der vorhergehenden Ansprüche, wobei die feuerbeständige Schicht (31) an die druckbeständige Schicht (32, 33) angeschraubt ist.

5. Feuerbeständiges Ventil (1) nach Anspruch 4, wobei die feuerbeständige Schicht (31) an die Zwischengrundplatte (32) der druckbeständigen Schicht (32, 33) angeschraubt ist.

6. Feuerbeständiges Ventil (1) nach einem der Ansprüche 4-5, wobei die Schrauben, die zum Anschrauben der feuerbeständigen Schicht (31) an die druckbeständige Schicht (32, 33) verwendet werden, mit einem feuerbeständigen Silikon abgedeckt sind.

7. Feuerbeständiges Ventil (1) nach einem der vorhergehenden Ansprüche, wobei die feuerbeständige Schicht (31) zwischen 40 mm und 80 mm dick ist.

8. Feuerbeständiges Ventil (1) nach einem der vorhergehenden Ansprüche, das ferner einen feuerbeständigen Einstellflansch (6) umfasst, der an eine Vorderseite der Endkante (21) des zylindrischen Körpers (2) gekoppelt ist.

9. Feuerbeständiges Ventil (1) nach einem der vorhergehenden Ansprüche, das ferner einen intumeszierenden Dichtring umfasst, der zum Sicherstellen eines luftdichten Anschlags der kreisförmigen Scheibe (3) an der kreisförmigen Endkante (21) des zylindrischen Körpers (2) an der Peripherie der feuerbeständigen Schicht (31) der kreisförmigen Scheibe (3) bereitgestellt ist.

10. Feuerbeständiges Ventil (1) nach einem der vorhergehenden Ansprüche, das ferner einen Motor (7) umfasst, der dazu ausgelegt ist, die kreisförmige Scheibe (3) zu veranlassen, sich zwischen der offenen Position und der geschlossenen Position zu bewegen.

## Revendications

1. Soupape ignifuge (1) destinée aux tunnels ferroviaires à grande vitesse, comprenant un corps principal cylindrique (2) et un disque circulaire (3), dans laquelle le disque (3) tourne autour d'un essieu radial (4) contenu dans un plan d'extrémité du corps principal (2), dans laquelle le plan d'extrémité est perpendiculaire à un axe (A) du corps principal cylindrique (2), de sorte que le disque circulaire (3) alterne entre une position fermée où il est contenu dans ledit plan d'extrémité et vient en butée contre un bord d'extrémité circulaire (21) du corps cylindrique (2), et une position ouverte où il est contenu dans un plan parallèle à l'axe (A) du corps principal cylindrique (2),
dans laquelle le disque (3) comprend une couche ignifuge externe (31) conçue pour supporter la chaleur d'un feu, accouplée à une couche résistante résistante à la pression interne (32, 33) conçue pour supporter une onde de pression causée par un train à grande vitesse entrant dans un tunnel, dans laquelle la couche résistante à la pression interne (31) comprend une plaque de base métallique intermédiaire (32) et un bâti rigide interne (33) relié à ladite plaque de base intermédiaire (32),
dans laquelle le bâti rigide interne (33) comprend une pluralité de barres métalliques ayant une section transversale essentiellement carrée reliée de manière rigide à une face interne de la plaque de base (32), et
dans laquelle l'essieu radial (4) comprend une partie centrale et des parties d'extrémité (41) respectives, la partie centrale comprenant une barre métallique radiale (331) du bâti rigide interne (33), et les parties d'extrémité (41) étant reliées à la barre métallique radiale (331) au moyen de douilles (B).

2. Soupape ignifuge (1) selon la revendication 1, dans laquelle le bâti rigide interne (33) a la forme d'un carré superposé d'une croix.

3. Soupape ignifuge (1) selon la revendication 2, dans laquelle le carré du bâti rigide interne (33) comprend quatre barres formant un carré, la croix du bâti rigide interne (33) comprend deux barres formant une croix, où chacune des barres formant la croix est parallèle à une paire de barres respective formant le carré, et dans laquelle une barre (331) des deux barres formant la croix est la partie centrale de l'essieu radial (4).

4. Soupape ignifuge (1) selon l'une quelconque des revendications précédentes, dans laquelle la couche ignifuge (31) est vissée à la couche résistante à la pression (32, 33).

5. Soupape ignifuge (1) selon la revendication 4, dans laquelle la couche ignifuge (31) est vissée à la plaque de base intermédiaire (32) de la couche résistante à la pression (32, 33).

6. Soupape ignifuge (1) selon l'une quelconque des revendications 4 à 5, dans laquelle les vis utilisées pour visser la couche ignifuge (31) à la couche résistante à la pression (32, 33) sont recouvertes de silicone ignifuge.

7. Soupape ignifuge (1) selon l'une quelconque des revendications précédentes, dans laquelle la couche ignifuge (31) a une épaisseur entre 40 mm et 80 mm.

8. Soupape ignifuge (1) selon l'une quelconque des revendications précédentes, comprenant en outre une bride d'ajustement ignifuge (6) accouplée à un côté avant du bord d'extrémité (21) du corps cylindrique (2).

9. Soupape ignifuge (1) selon l'une quelconque des revendications précédentes, comprenant en outre un anneau d'étanchéité intumescent fourni à la périphérie de la couche ignifuge (31) du disque circulaire (3) pour assurer une butée étanche à l'air dudit disque circulaire (3) contre le bord d'extrémité circulaire (21) du corps cylindrique (2).

10. Soupape ignifuge (1) selon l'une quelconque des revendications précédentes, comprenant en outre un moteur (7) conçu pour amener le disque circulaire (3) à se déplacer entre la position ouverte et la position fermée.
